# DEMANDE DE BREVET EUROPEEN

(11) **EP 1 968 258 A1**
(43) Date de publication de la demande: **10.09.2008**
(21) Numéro de dépôt: 08102192.5
(22) Date de dépôt: 29.02.2008
(51) Int. Cl.: H04L 12/56

(54) **Dispositif d'aide au routage transverse de trafics entre sites distants au sein d'un réseau de communication radio**

(30) Priorité: 01.03.2007 FR 0753576
(71) Demandeur: Alcatel Lucent, 75008 Paris (FR)
(72) Inventeur: Farineau, Jean, 92300 Levallois Perret (FR)
(74) Mandataire: Hedarchet, Stéphane

(57) **Abrégé**

Un dispositif (D1) est destiné à aider le routage de trames entre terminaux (T1, T2) par un routeur de trafic (R1) raccordé, via une portion de réseau de transmission, à un réseau radio comprenant un commutateur d'appels (MSC). Ce dispositif d'aide (D1) comprend des moyens de traitement chargés d'adjoindre des données d'identification du routeur de trafic (R1) à des trames issues d'un premier terminal (T1), connecté au routeur de trafic (R1), et destinées à un second terminal (T2), connecté à un autre routeur de trafic (R2) du réseau radio. Les données d'identification sont destinées à permettre à cet autre routeur de trafic (R2) de déterminer pour chaque nouveau circuit établi si le routeur de trafic (R1) est connecté à la même portion de réseau de transmission que celle qui le relie au réseau radio, et dans l'affirmative d'alerter le réseau radio de sorte qu'il alloue à cette portion de réseau de transmission commune des ressources dédiées à la transmission directe de trames d'un flux dit principal entre ces deux routeurs de trafic (R1, R2) via la portion de réseau de transmission commune, sans un aller/retour via le commutateur d'appels (MSC).

## Description

L'invention concerne le domaine des réseaux de communication radio, et plus particulièrement le routage du trafic entre terminaux de communication rattachés à des sites (ou stations) de transmission distant(e)s appartenant à de tels réseaux radio.

On entend ici par « réseau de communication radio » un réseau radio dans lequel les trafics échangés par des terminaux de communication doivent être transmis à un commutateur d'appels chargé de gérer des communications établies dans un secteur géographique donné, via un satellite de communications et/ou un réseau radio terrestre couplé à deux équipements de transmission (ou sites distants), eux-mêmes raccordés chacun à un routeur de trafic. Par exemple dans un réseau radio de type GSM/GPRS ou UMTS, les deux routeurs de trafic et les deux équipements de transmission peuvent être installés soit au niveau de l'interface dite « A-bis » du réseau, c'est-à-dire entre certaines de ses stations de base et son contrôleur de stations de base associé, soit sur l'interface dite « A-ter », c'est-à-dire entre son contrôleur de stations de base et un transcodeur couplé au commutateur d'appels associé (ou MSC pour « Mobile-services Switching Centre ») et chargé de convertir la voix compressée en paroles numérisées à 64 kbps (kilo bits par seconde), soit encore sur l'interface dite « A », c'est-à-dire entre ledit transcodeur et ledit commutateur d'appels.

L'invention concerne donc les réseaux radio (ou sans fil ou mobiles ou encore cellulaires), avec ou sans déport(s) satellitaire, y compris les réseaux dits de nouvelle génération ou NGN (« Next Generation Network » - réseaux à commutation de paquets).

Lorsque l'on analyse les matrices de trafic de certains pays devant faire l'objet d'un déploiement d'infrastructures de communication, on s'aperçoit que les volumes d'échange les plus importants se font non seulement avec leur capitale, mais également avec plusieurs noeuds de trafic constitués par de grandes villes de province. Pour permettre ces volumes d'échange, plusieurs solutions peuvent être envisagées.

Une première solution consiste à déployer un réseau radio en étoile, comme par exemple un réseau DVB-RCS (« Digital Video Broadcast - Return Channel System » - communications par satellite pour des applications multimédia à large bande). Un tel réseau radio constitue une solution très attractive pour un opérateur de réseau GSM ne disposant pas d'infrastructure terrestre, du fait des coûts réduits des équipements de réseau et de la rapidité et la facilité de déploiement. Mais, le coût d'exploitation d'un réseau radio en étoile à déport satellitaire est, en l'état de la technique connue, quasi rédhibitoire du fait du coût de la location de ressources satellitaires.

Une deuxième solution, plus traditionnelle, consiste à utiliser un réseau maillé du type de ceux utilisés pour les communications entre terminaux fixes ou entre télécopieurs. Hélas, ce type de réseau est incompatible avec les trafics et avec la signalisation de certains types de réseau, comme par exemple les réseaux de type GSM. Il serait certes possible d'interpréter la signalisation (par exemple GSM), mais cela s'avère particulièrement lourd. De plus, effectuer un routage en mode maillé sans implanter un commutateur d'appels (par exemple un MSC) dans chaque site distant conduit à casser le modèle sur lequel repose le GSM et induit un fort impact sur la gestion des sous-systèmes qui ne peut plus se faire normalement, alors même que cette gestion n'est déjà pas triviale en configuration classique.

Une troisième solution consiste à implanter un commutateur d'appels (par exemple un MSC) dans chaque site (ou station) distant(e). Mais cela s'avère très onéreux. En outre, cela nécessite le déploiement d'un réseau de transmission par satellite comprenant plusieurs liens de type point-à-point (ou « unicast ») à débit élevé, calqué sur la matrice de trafic. Or, cela est également très onéreux et lourd à gérer en fonction des évolutions de la matrice de trafic du réseau global.

Aucune solution connue n'étant entièrement satisfaisante, l'invention a donc pour but d'améliorer la situation, et notamment de permettre l'établissement de liens transverses entre sites (ou stations) distant(e)s de réseaux de communication radio qui peuvent ne pas être agencés de manière à fonctionner en mode maillé (comme c'est par exemple le cas d'un réseau DVB-RCS), et sans nécessiter une interprétation de la signalisation.

Elle propose à cet effet un premier dispositif destiné à aider un routeur de trafic (raccordé via une portion de réseau de transmission à un réseau de communication radio comprenant un commutateur d'appels (par exemple de type MSC)) à router des trames de trafic entre des terminaux de communication.

Ce premier dispositif d'aide se caractérise par le fait qu'il comprend des moyens de traitement chargés d'adjoindre des données d'identification de leur routeur de trafic à des trames qui sont issues d'un premier terminal (rattaché à leur routeur de trafic) et qui sont destinées à un second terminal (rattaché à un autre routeur de trafic du réseau de communication radio). Les données d'identification sont ici destinées à permettre à l'autre routeur de trafic de déterminer pour chaque nouveau circuit établi si le routeur de trafic considéré est connecté à la même portion de réseau de transmission que celle qui le relie au réseau de communication radio. Si tel est le cas, l'autre routeur de trafic est alors chargé d'alerter le réseau de communication radio afin qu'il alloue à la portion de réseau de transmission commune des ressources dédiées à la transmission directe de trames d'un flux dit principal entre les deux routeurs de trafic considérés via la portion de réseau de transmission commune et sans faire un aller/retour via le commutateur d'appels.

Il est important de noter que l'on entend ici par « trames d'un flux principal » des trames qui sont transmises d'un terminal vers une portion de réseau de transmission, et par « trames d'un flux secondaire » des trames qui sont transmises du réseau radio (côté site central (ou « hub »)) vers une portion de réseau de transmission, à destination d'au moins un terminal.

Le premier dispositif d'aide selon l'invention peut comporter d'autres caractéristiques qui peuvent être prises séparément ou en combinaison, et notamment :
- ses moyens de traitement peuvent être chargés d'adjoindre des données d'identification qui définissent au moins un identifiant de son routeur de trafic, un identifiant de lien de type E1, un identifiant d'intervalle temporel (ou « time slot ») sur ce lien de type E1 et un identifiant du nombre de bits par trame qui peut être transmis sur ce lien de type E1;
- il peut comprendre des moyens de détection chargés d'analyser le contenu des trames d'un flux dit secondaire reçues du réseau de communication radio via la portion de réseau de transmission afin de déterminer si une trame d'un flux secondaire contient des données d'identification d'un autre routeur de trafic. Si tel est le cas, les moyens de détection sont alors chargés d'adresser au réseau de communication radio un message lui signalant que les deux routeurs de trafic considérés sont connectés à la portion de réseau de transmission, afin qu'il alloue à cette portion de réseau de transmission des ressources dédiées à la transmission directe des trames d'un flux principal correspondant audit flux secondaire entre ces deux routeurs de trafic via la portion de réseau de transmission, c'est-à-dire sans faire un aller/retour via le commutateur d'appels ;
   > les moyens de détection peuvent par exemple être chargés d'intégrer dans le message des duplicata des données d'identification du premier routeur de trafic qui ont été déterminées dans une trame d'un flux secondaire ;
- il peut comprendre des moyens de démodulation chargés d'extraire les données utiles qui sont contenues dans les trames d'un flux principal reçues directement, afin qu'elles soient intégrées par son routeur de trafic dans des trames reconstruites avec leurs informations de signalisation initiales transmises par le réseau communication radio via la portion de réseau de transmission dans des trames d'un flux secondaire.

L'invention propose également un second dispositif destiné à aider le routage de trames de trafic entre des terminaux de communication connectés à des routeurs de trafic différents d'un réseau de communication radio comprenant également un commutateur d'appels (par exemple de type MSC), un routeur de trafic central et des moyens d'allocation chargés d'allouer des ressources à au moins une portion de réseau de transmission (connectée au moins aux deux routeurs de trafic et au routeur de trafic central).

Ce second dispositif d'aide se caractérise par le fait qu'il comprend des moyens de contrôle chargés, en cas de réception d'un message issu de l'un des routeurs de trafic et signalant que ces deux routeurs de trafic sont connectés à la portion de réseau de transmission, d'ordonner aux moyens d'allocation d'allouer à la portion de réseau de transmission des ressources dédiées à la transmission directe de trames d'un flux dit principal entre ces deux routeurs de trafic via la portion de réseau de transmission (c'est-à-dire sans faire un aller/retour via le commutateur d'appels).

Le second dispositif d'aide selon l'invention peut comporter d'autres caractéristiques qui peuvent être prises séparément ou en combinaison, et notamment :
- il peut comprendre des moyens d'analyse chargés de détecter les trames d'un flux principal qui sont issues de l'un des routeurs de trafic et sont destinées à l'autre de ces routeurs de trafic et qui sont parvenues pour la seconde fois dans le routeur de trafic central après avoir transité par le commutateur d'appels, afin d'ordonner au routeur de trafic central d'extraire de ces trames détectées de ce flux principal les données utiles qu'elles contiennent pour qu'il ne retransmette dans des trames d'un flux dit secondaire que les informations de signalisation (ainsi qu'éventuellement les données d'identification) qu'elles contiennent, à destination de l'autre routeur de trafic, via la portion de réseau de transmission, ces trames (TRAU) étant signalées via des bits d'entête en tant que trames non valides ;
   > les moyens d'analyse peuvent être chargés de déterminer les données d'identification qui sont contenues dans les trames d'un flux principal qui parviennent dans le routeur de trafic central sur une voie montante et sur une voie descendante et de considérer comme une trame détectée d'un flux principal chaque trame de la voie descendante qui contient des données d'identification qui sont identiques à celles qui sont contenues dans une trame d'un flux principal de la voie montante;
   > les moyens d'analyse peuvent être chargés d'ordonner au routeur de trafic central d'extraire les données utiles qui sont contenues dans une trame détectée d'un flux principal lorsqu'il reçoit un message d'acquittement provenant d'un routeur de trafic ayant correctement reçu des données utiles dans une trame d'un flux principal qui correspond à cette trame détectée d'un flux principal.

L'invention est particulièrement bien adaptée, bien que de façon non exclusive, aux réseaux de communication radio (ou sans fil) à déport satellitaire. Mais, elle est également adaptée aux réseaux radio terrestres, par exemple de type WLAN, WiMAX ou WiFi.

D'autres caractéristiques et avantages de l'invention apparaîtront à l'examen de la description détaillée ci-après, et des dessins annexés, sur lesquels :
- la figure 1 illustre de façon très schématique une partie d'une installation de communication équipée d'exemples de réalisation de premiers et second dispositifs d'aide selon l'invention, et le trajet des flux principaux dans une phase d'instauration d'une liaison directe,
- la figure 2 illustre de façon très schématique et fonctionnelle un exemple de site distant équipé d'un exemple de réalisation de premier dispositif d'aide selon l'invention, et
- la figure 3 illustre les trajets des flux principaux et secondaires une fois la liaison directe établie dans l'installation de communication de la figure 1.

Les dessins annexés pourront non seulement servir à compléter l'invention, mais aussi contribuer à sa définition, le cas échéant.

L'invention a pour objet de permettre l'établissement de liens transverses, sans nécessiter une interprétation de la signalisation, entre des sites (ou stations) distant(e)s d'un réseau de communication radio qui n'est pas forcément agencé de manière à fonctionner en mode maillé, ces sites (ou stations) distant(e)s étant connecté(e)s à ce réseau radio via une portion de réseau de transmission.

Dans ce qui suit, on considère à titre d'exemple non limitatif que le réseau de communication radio est un réseau de téléphonie cellulaire (ou mobile), par exemple de type GSM/GPRS, à déport satellitaire. Mais, l'invention n'est pas limitée à ce type de réseau de communication radio. Elle concerne en effet tous les réseaux radio terrestres, et notamment ceux de type EDGE, UMTS, WLAN, WiMAX et Wi-Fi, et d'une manière générale les réseaux de communication radio terrestres tels que ceux de type TDMA, FDMA ou CDMA (qui sont adaptés à un fonctionnement en mode maillé), y compris les réseaux dits de nouvelle génération ou NGN (pour « Next Generation Network »). Elle concerne également les réseaux de communication par satellite. Par ailleurs, la portion de réseau de transmission qui assure la connexion avec les stations de base (BTSs) auxquelles sont rattachés les terminaux de communication radio n'est pas forcément constituée par un déport satellitaire. Tout type de portion de réseau de transmission peut être envisagé, qu'il soit terrestre ou satellitaire, et notamment ceux de type LMDS, et d'une manière générale tous ceux de type point à multipoints radio (disposant de préférence d'antennes peu directives).

Par ailleurs, dans ce qui suit on entend par « terminal de communication mobile » tout équipement de communication mobile capable d'échanger des données sous la forme de signaux radio avec une station de base BTS. Il pourra donc s'agir, par exemple, d'équipements d'utilisateurs, tels que des téléphones mobiles (ou cellulaires) ou des ordinateurs portables ou des assistants personnels numériques (ou PDA) munis d'un équipement de communication radio. Mais, l'invention concerne également les communications entre terminaux (ou stations) fixes communiquant via des réseaux de communication mobile. La notion de mobilité est ici nullement limitative, elle est seulement destinée à illustrer un exemple d'application de l'invention à un réseau radio de type cellulaire.

On considère dans ce qui suit que les terminaux de communication mobiles sont des téléphones mobiles Tk (ici k = 1 ou 2).

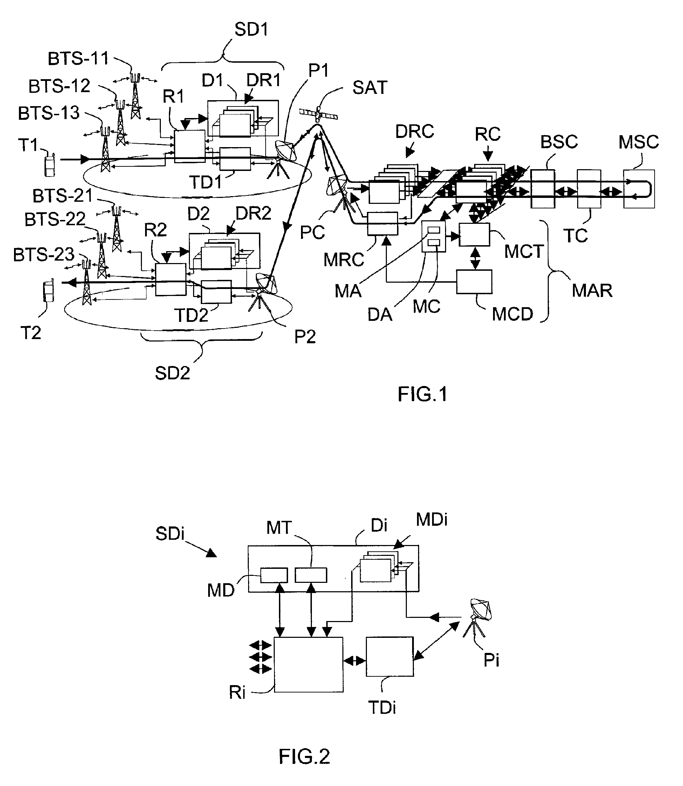

Comme cela illustré sur la figure 1, un réseau GSM/GPRS à déport satellitaire comprend schématiquement, mais de façon suffisante à la compréhension de l'invention :
- des stations de base (ou BTSs pour « Base Transceiver Stations ») BTS-ij (ici j = 1 à 3) comportant des équipements radio réalisant la liaison avec des terminaux de communication mobiles Tk,
- un ou plusieurs contrôleurs de stations de base BSC (pour « Base Station Controller ») auxquels sont raccordées une ou plusieurs stations de base BTS-ij et chargés d'assurer la gestion des ressources radio,
- au moins un lien satellite (ou déport satellitaire) comportant un satellite de communications SAT, et des équipements de communication satellitaire Pi et PC, se présentant généralement sous la forme d'une passerelle (ou « gateway ») et chargés de transmettre et recevoir du trafic et de la signalisation via le satellite SAT,
- au moins un commutateur d'appels central MSC (pour « Mobile-services Switching Centre ») chargé de gérer les communications établies dans le secteur géographique couvert par les stations de base BTS couplées au(x) contrôleur(s) de stations de base BSC au(x)quel(s) il est couplé, via le satellite SAT, et raccordé à un coeur du réseau (par exemple de type PLMN (pour « Public Land Mobile Network »)) ainsi que de préférence (et comme illustré) à un transcodeur TC chargé de convertir la voix compressée en paroles numérisées à 64 kbps (kilo bits par seconde) et réciproquement,
- des routeurs de trafic Ri (ici i = 1 ou 2) respectivement couplés à un groupe de stations de base BTS-ij et aux équipements de communication satellitaire Pi, via un terminal de traitement TDi, par exemple de type DVB-RCS. Chaque routeur de trafic Ri est chargé de router les trafics qu'il reçoit en fonction de leur(s) destination(s). Il peut également assurer la compression/décompression de couche deux pour la transmission mixte synchrone/asynchrone de trames de données (les données utiles (ou « payload ») de chaque trame TRAU sont extraites et transmises avec une représentation compactée de l'entête de signalisation de la trame TRAU, les trames TRAU qui ne sont pas de parole ou de données utiles (comme par exemple les trames non valides, les trames SID et les trames de bourrage) sont transmises simplement sous la forme compactée de leur entête de signalisation, avec en plus dans le cas des trames SID des informations caractérisant le bruit de confort (partie limitée de la payload)). Dans l'exemple illustré, le lien satellite est implanté au niveau de l'interface A-bis du réseau, c'est-à-dire entre les stations de base BTS-ij et le contrôleur de stations de base BSC (couplé au commutateur d'appels central MSC via le transcodeur TC). Mais, le lien satellite peut être implanté au niveau de l'interface A-ter du réseau, c'est-à-dire entre un contrôleur de stations de base BSC et un transcodeur TC. Dans ce cas, les routeurs de trafic sont raccordés au contrôleur de stations de base BSC. Le lien satellite peut être également implanté au niveau de l'interface A, c'est-à-dire entre le transcodeur TC et le commutateur d'appels central MSC. Toutes ces interfaces sont définies par les normes G.703 pour ce qui concerne la couche physique et G.704 pour ce qui concerne le tramage (généralement à 2048 kbps),
- des démodulateurs centraux DRC connectés à l'équipement de communication satellitaire PC afin de recevoir les trames montantes (se dirigeant vers le commutateur d'appels MSC),
- un modulateur central MRC connecté à l'équipement de communication satellitaire PC afin de lui transmettre les trames descendantes (se dirigeant vers les stations de base BTS-ij et provenant du commutateur d'appels MSC),
- un routeur de trafic central RC couplé aux démodulateurs centraux DRC, au modulateur central MRC et (ici) au contrôleur de station de base BSC, et chargé de router les trafics qu'il reçoit en fonction de leur(s) destination(s). Il peut également être chargé de la décompression/compression de couche deux pour la transmission mixte synchrone/asynchrone des trames de données (par conséquent il restitue le contenu et le format d'origine des trames reçues sous forme compactée),
- des moyens d'allocation de ressources MAR, par exemple constitué d'un contrôleur de trafic MCT connecté au routeur de trafic central RC et d'un contrôleur d'allocation de ressources MCD, par exemple de type DAMA (pour « Demand Assignment Multiple Access » - allocation dynamique), connecté au contrôleur de trafic MCT et au modulateur central MRC.

Dans ce qui suit, on appelle « site (ou station) distant(e) » SDi un ensemble constitué d'un routeur de trafic Ri et d'un terminal de traitement TDi, et « site (ou station) central(e) » (ou « hub ») un ensemble constitué du routeur de trafic central RC, des démodulateurs centraux DRC, du modulateur central MRC et des moyens d'allocation de ressources MAR (MCT et MCD).

Dans ce qui suit, on considère que les communications (ou appels) se font selon le mode dit TFO (pour « Tandem Free Operation »). II est rappelé qu'un appel entre terminaux mobiles en mode TFO se caractérise par une absence de transcodage afin de garantir une meilleure qualité d'écoute du fait de l'absence de ré-encodage du flux de parole. De ce fait, les trames TRAU sont traitées par le transcodeur TC en mode transparent, véhiculées par le commutateur d'appels MSC en mode transparent, et ré-encodées par le transcodeur en mode transparent.

Mais, l'invention concerne également les communications qui ne se font pas en mode TFO, moyennant des adaptations accessibles à l'homme de l'art. Un premier exemple de mode particulier d'implémentation de cette fonction sans mode TFO consiste à insérer dans le signal audio des porteuses dont le niveau est très faible afin de ne pas être perceptibles par les utilisateurs. Ces porteuses sont modulées afin de porter un code identifiant unique du site distant source. Ces porteuses sont ajoutées au signal audio. Elles sont détectables par le routeur de trafic opposé (distant) pendant les plages de silence (en moyenne 50% du temps de conversation), en adoptant par exemple un processus d'analyse par corrélation. La démodulation de ces porteuses permet de récupérer l'identifiant du site distant source, et donc de signaler au site central (hub) qu'il s'agit d'un appel entre deux sites distants du même réseau afin qu'il établisse le chemin de réception directe entre ces deux sites distants.

Un second exemple d'implémentation consiste à corréler le trafic utile montant et le trafic utile descendant, voie par voie, notamment après chaque établissement de circuit (sur établissement d'appel et sur transfert intercellulaire (ou « handover »)). Cette corrélation est effectuée par le routeur central RC. Elle permet de détecter qu'un appel s'effectue d'un site distant à un autre site distant, d'identifier les liens E1 concernés (source et destination) et les intervalles temporels (time slots) concernés. Le routeur central RC transmet alors cette information aux moyens d'allocation de ressources MAR, afin qu'un chemin de réception directe soit établi entre chaque site distant concerné.

Dans un tel réseau radio, les données sont échangées sur l'interface A-bis au moyen de canaux de signalisation multiples (au moins un canal par station de base BTS), occupant chacun soit un octet par trame E1 (dans le cas de canaux de signalisation à 64 kbps), soit quatre bits par trame (dans le cas de canaux à 32 kbps), soit encore deux bits par trame (dans le cas de canaux à 16 kbps).

Lorsque les données échangées sont des données de trafic, les canaux utilisés sont des canaux de trafic TCH (pour « Traffic Channels »). Chaque canal TCH occupe alors soit deux bits par trame (dans le cas d'un canal de type « Full Rate » (ou FR), ou EFR ou encore AMR, à 16 kbps), soit un bit par trame (dans le cas d'un canal de type « Half Rate » (ou HR) à 8 kbps). Dans le cas d'une communication vocale on utilise un canal TCH dans chaque sens, de taille et de position identiques au sein de chaque trame dite E1 entrante ou sortante sur un port physique donné.

Dans un réseau à déport satellitaire de type classique, c'est-à-dire dans lequel l'invention n'est pas mise en oeuvre, l'établissement d'une communication (ou d'un appel) entre un premier téléphone mobile T1, dit appelant, et un second téléphone mobile T2, dit appelé, requiert une succession d'étapes dont les principales sont rappelées ci-après.

L'utilisateur du premier téléphone mobile T1 compose le numéro du second téléphone mobile T2. Un échange de messages de signalisation se fait alors entre le premier téléphone mobile T1 et le commutateur d'appels central MSC afin de caractériser l'appel, et notamment le numéro de l'appelé T2. Le commutateur d'appels MSC utilise ensuite sa base de données d'abonnés afin de déterminer la localisation de l'appelé T2. On considère ici, comme illustré, que l'appelé T2 est un abonné du réseau situé dans le secteur géographique géré par le commutateur d'appels MSC.

Un échange de messages de signalisation se fait alors entre le commutateur d'appels MSC et le second téléphone mobile T2 afin de déclencher la sonnerie de ce dernier. On établit des premiers canaux de trafic montant et descendant entre le premier téléphone mobile T1 et le commutateur d'appel central MSC, puis des seconds canaux de trafic montant et descendant entre le second téléphone mobile T2 et le commutateur d'appel central MSC, ce qui constitue au total quatre circuits (deux montants et deux descendants).

Si l'utilisateur du second téléphone mobile T2 décroche, la procédure d'établissement d'appel est conclue et les quatre circuits sont utilisés pendant toute la durée de la communication afin de véhiculer la voix (ici compressée). Dès que l'un des deux utilisateurs raccroche, les quatre circuits sont libérés.

Chacun des quatre circuits utilise une capacité de 16 kbps ou 8 kbps selon le type de codage de la voix utilisé. Par conséquent, un appel local entre deux téléphones mobiles utilise une capacité de 32 ou 64 kbps sur le lien satellite Pi, SAT, PC.

On comprendra donc que dans un réseau à déport satellitaire de type classique toutes les trames échangées par deux terminaux Tk, et notamment les trames de trafic (qui véhiculent la voix), dites trames TRAU, doivent obligatoirement remonter jusqu'au commutateur d'appels MSC, dans un flux dit principal. Lorsque les deux terminaux Tk sont connectés à des stations de base BTS-ij qui sont elles-mêmes connectées à deux sites distants SDi différents mais desservis par le même satellite SAT (portion de réseau de transmission), les trames de trafic doivent donc aller d'un terminal T1 (ou T2) vers le satellite SAT, puis de ce dernier vers le commutateur d'appels MSC, puis de nouveau du commutateur d'appels MSC vers le satellite SAT, et enfin de ce dernier vers l'autre terminal T2 (ou T1). Les trames qui montent d'un terminal vers une portion de réseau de transmission, puis vers le site central (et donc le commutateur d'appels MSC) sont dites trames d'un flux principal, tandis que les trames qui descendent du site central vers la portion de réseau de transmission, puis vers un ou plusieurs terminaux sont dites trames d'un flux secondaire. Les notions de flux principal et flux secondaire sont des notions logiques.

Or, lorsque le nombre d'appels est élevé la capacité totale requise au niveau du satellite SAT peut être très importante, rendant ainsi le déport par satellite quasi rédhibitoire en terme de coût de location.

L'invention a donc pour but de remédier à cet inconvénient en proposant d'implanter, d'une part, un premier dispositif d'aide Di dans certains au moins des sites distants SDi (et de préférence dans tous), et d'autre part, un second dispositif d'aide DA dans le site central.

Un premier dispositif d'aide Di est plus précisément destiné à aider un premier routeur de trafic Ri à effectuer ses routages de trames, en particulier celles de trafic, tandis qu'un second dispositif d'aide DA est plus précisément destiné à aider un routeur de trafic central RC à effectuer ses routages de trames.

Un premier dispositif d'aide Di est illustré schématiquement, et à titre d'exemple non limitatif, sur la figure 2.

Comme illustré, un premier dispositif d'aide Di comprend au moins un module de traitement MT chargé d'adjoindre des données d'identification du (premier) routeur de trafic Ri qu'il aide à des trames d'un flux principal qui sont issues d'un premier terminal Tk (qui est connecté à ce même premier routeur de trafic Ri) et qui sont destinées à un second terminal Tk' (qui est connecté à un autre (second) routeur de trafic Ri'). On entend ici par « trame d'un flux principal » une trame contenant au moins des informations de signalisation ainsi qu'éventuellement des données utiles (ou « payload »).

Ces données d'identification sont destinées à permettre au second routeur de trafic Ri' (par exemple R2) de déterminer, lorsqu'il reçoit sur un nouveau circuit établi une trame d'un flux secondaire correspondant à une trame d'un flux principal issue du premier routeur de trafic Ri, si le premier routeur de trafic Ri (par exemple R1) est connecté à la même portion de réseau de transmission Pi, Pi', SAT, PC que celle qui le relie au réseau radio et plus précisément à son site central (ou hub).

Il est important de noter qu'une trame d'un flux principal devient de façon logique une trame d'un flux secondaire lorsqu'elle repart du routeur central RC après être passée par le commutateur d'appels MSC. Par conséquent, une trame d'un flux principal peut être identique à une trame d'un flux secondaire.

Par exemple, les données d'identification d'un routeur de trafic Ri définissent au moins son identifiant, un identifiant de lien de type E1 qu'il va utiliser pour la communication demandée, un identifiant d'intervalle temporel (ou « time slot ») sur ce lien de type E1 et un identifiant du nombre de bits par trame qui peut être transmis sur ce lien de type E1 (par exemple deux bits par trame dans le cas d'un canal FR, EFR ou AMR à 16 kbps, ou un bit par trame dans le cas d'un canal HR à 8 kbps).

On notera que les données d'identification (ou signature) peuvent être adjointes de différentes manières. Ainsi, elles peuvent par exemple être adjointes dans les toutes premières trames TRAU d'une communication qui sont présentes pendant la phase d'établissement d'appel, avant que les trames de parole ne soient pertinentes (les correspondants n'étant pas encore en contact). En variante, elles peuvent par exemple être adjointes au début ou pendant toute la durée de la communication (appel), par insertion dans les données utiles (ou payload) des trames non valides ou de bourrage en mode DTX (pour « Discontinuous Transmission »). Quand ce mode DTX est activé les périodes de silence sont détectées par le terminal mobile et la transmission en provenance de ce dernier est coupée pendant les silences détectés, hormis une trame toutes les 500 ms pour la caractérisation du bruit de confort (il s'agit d'une trame TRAU dans laquelle une partie seulement des bits de la payload est significative, et qui est généralement appelée trame SID (pour « Silence Description »)). Dans une autre variante, elles peuvent par exemple être adjointes au début ou pendant toute la durée de la communication (appel), par insertion dans les données utiles (ou payload) des trames SID, et plus précisément en les substituant aux bits non significatifs de la payload. Dans encore une autre variante, elles peuvent par exemple être adjointes au début ou pendant toute la durée de la communication (appel), par insertion dans les données utiles (ou payload) des trames TRAU sans distinction, et plus précisément en les substituant aux bits les moins significatifs de la payload (« vol de bits »), soit de manière cyclique, soit de manière permanente.

L'insertion de données d'identification est contrôlée par le module de traitement MT et est effectuée à l'intérieur du routeur de trafic Ri qu'il aide.

On notera que le premier dispositif d'aide Di peut être soit implanté dans un routeur de trafic Ri d'un site distant SDi, soit connecté à un routeur de trafic Ri d'un site distant SDi comme illustré (non limitativement) sur les figures 1 à3.

Chaque premier dispositif d'aide Di doit disposer d'un module de détection MD afin de pouvoir analyser le contenu des trames que reçoit le routeur de trafic Ri qu'il aide, et ainsi déterminer si une trame d'un flux secondaire reçue contient des données d'identification d'un autre routeur de trafic Ri'.

Si le module de détection MD s'aperçoit qu'une trame d'un flux secondaire reçue ne contient pas de données d'identification ou que les premier R1 et second R2 routeurs de trafic ne sont pas desservis par la même portion de réseau de transmission, alors les trames seront transmises classiquement, comme indiqué précédemment, c'est-à-dire via le commutateur d'appels MSC.

En revanche, si le module de détection MD s'aperçoit qu'une trame d'un flux secondaire reçue contient des données d'identification qui signalent que les premier R1 et second R2 routeurs de trafic sont desservis par la même portion de réseau de transmission P1, P2, SAT, PC, alors il ordonne à son routeur de trafic R2 d'adresser au réseau radio (via le satellite SAT) un message d'alerte lui signalant que les premier R1 et second R2 routeurs de trafic sont connectés à la même portion de réseau de transmission.

De préférence, le module de détection MD ordonne à son routeur de trafic Ri d'intégrer dans le message d'alerte un duplicata des données d'identification du routeur de trafic Ri' qu'il vient de déterminer dans la trame de flux secondaire reçue.

Lorsque ce message d'alerte parvient au niveau du routeur de trafic central RC, il est détecté par le second dispositif d'aide DA qui est chargé de l'aider. A cet effet, le second dispositif d'aide DA comprend un module d'analyse MA chargé d'analyser certaines au moins des trames reçues par le routeur de trafic central RC, et notamment celles qui définissent des messages d'alerte afin d'extraire les informations qu'elles contiennent.

Le second dispositif d'aide DA comprend un module de contrôle MC qui est chargé, chaque fois que le module d'analyse MA lui transmet des informations extraites d'un message d'alerte, d'ordonner aux moyens d'allocation de ressources MAR d'allouer à la portion de réseau de transmission Pi, Pi', SAT, PC, qui est commune aux deux routeurs de trafic Ri, Ri' désignés par lesdites informations extraites, des ressources dédiées à la transmission directe de trames d'un flux principal, contenant des données utiles (ou « payload »), entre les deux routeurs de trafic Ri et Ri' via cette portion de réseau de transmission commune et sans faire un aller/retour via le commutateur d'appels MSC.

Pour ce faire, le module de contrôle MC fournit au contrôleur de trafic MCT les informations (et notamment les données d'identification) qui ont été extraites de la trame contenant le message d'alerte par le module d'analyse MA. Le contrôleur de trafic MCT détermine alors les ressources nécessaires à la communication définie par les données d'identification et demande au contrôleur d'allocation de ressources MCD (ici de type DAMA) d'allouer à la portion de réseau de transmission Pi, Pi', SAT, PC qui dessert les deux routeurs de trafic Ri et Ri' des ressources permettant d'assurer la transmission directe de trames du flux principal entre ces deux routeurs de trafic Ri et Ri' via cette portion de réseau de transmission commune.

Pour l'établissement d'un lien direct entre un premier site distant SDi et un second site distant SDi', l'allocation de ressources de transmission consiste à déterminer quelle fréquence peut être émise par le premier site distant SDi et reçue par le second site distant SDi'. Ceci dépend de la configuration du (ou des) modulateur(s) DVB-RCS présent(s) dans le premier site distant SDi et de la configuration du (ou des) démodulateur(s) DVB-RCS présent(s) dans le second site distant SDi'. Dans un mode de réalisation particulier, une fréquence unique peut être allouée à l'ensemble des sites distants pour le trafic dit transverse. Cela permet, moyennant un terminal dédié (i.e. un modulateur DVB-RCS, en plus du terminal dédié au trafic échangé exclusivement avec le site central (hub)) et un démodulateur DVB-RCS opérant à la même fréquence, d'établir un chemin direct entre chaque site distant, au moins pour les sites principaux.

Cette allocation de fréquence est complétée par une allocation d'intervalle temporel (TDMA) ou de code (CDMA), toujours pour le sens allant du premier site distant SDi vers le second site distant SDi', et également une allocation de fréquence et un intervalle temporel ou un code pour le sens allant du second site distant SDi' vers le premier site distant SDi.

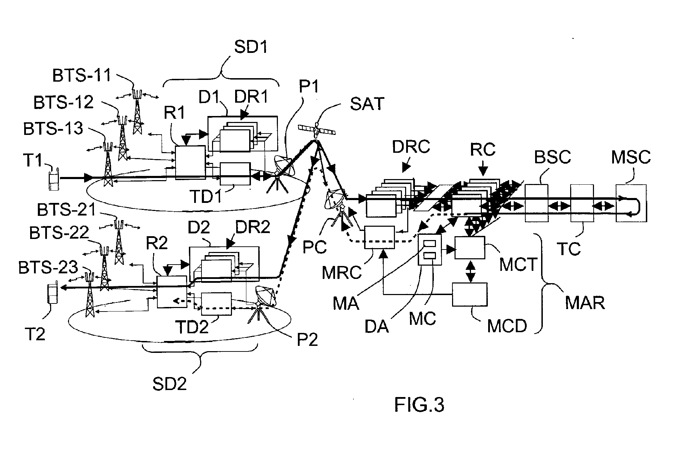

On notera que le second dispositif d'aide DA peut être soit implanté dans le routeur de trafic central RC d'un site central (ou hub), soit connecté à un routeur de trafic central RC d'un site central comme illustré (non limitativement) sur les figures 1 et 3.

Consécutivement à une allocation de ressources dédiées, le réseau radio avertit les sites distants SDi et SDi' (et plus précisément leurs premiers dispositifs d'aide Di et Di') qu'ils sont autorisés à exploiter directement des trames reçues en direct du site distant opposé, respectivement SDi' et SDi.

A réception de cette autorisation, le module de traitement MT avertit son routeur de trafic Ri. Les trames du flux principal qui ont fait l'objet de l'allocation de ressources sont alors transmises à la portion de réseau de transmission Pi, SAT qui les retransmet en direction du site central et des sites distants transverses. Dans l'exemple considéré, c'est le satellite SAT qui diffuse par voie d'ondes les trames vers les passerelles satellitaires Pi' et PC.

Les trames du flux principal suivent donc deux trajets différents à partir du satellite SAT, un trajet direct allant du satellite SAT au routeur de trafic R2 et un trajet classique indirect allant du satellite SAT au routeur central RC, puis au commutateur d'appels MSC. Le trajet direct et le trajet classique indirect sont matérialisés sur la figure 3 par des traits continus épais.

De préférence, le module d'analyse MA du second dispositif d'aide DA est chargé, du fait qu'il observe les trames qui sont reçues par le routeur de trafic central RC, de détecter les trames qui font un aller-retour via le commutateur d'appels MSC et qui concernent deux routeurs Ri et Ri' autorisés à procéder à une transmission directe de trames d'un flux principal. Plus précisément, il est chargé de détecter les trames d'un flux principal qui sont issues de l'un Ri (ou Ri') de ces deux routeurs de trafic et sont destinées à l'autre routeur de trafic Ri' (ou Ri) et qui parviennent pour la seconde fois dans le routeur de trafic central RC, dans un très court intervalle temporel, après être passées par le commutateur d'appels MSC.

Afin de détecter les trames d'un flux principal candidates à l'extraction de données utiles, le module d'analyse MA peut par exemple déterminer et comparer entre elles les données d'identification qui sont contenues dans les trames d'un flux principal qui parviennent dans le routeur de trafic central RC sur une voie montante et sur une voie descendante. En cas d'identité, la trame empruntant la voie descendante est alors considérée comme une trame d'un flux principal pouvant faire l'objet d'une extraction de données utiles.

Il est important de noter que l'on entend ici par « extraire » le fait de retirer ou supprimer des bits de données utiles (ou payload) pour les remplacer par des bits de bourrage à des fins de compactage (ou compression) avant transmission. Le champ "type de payload" qui est présent dans l'entête de la trame est alors remplacé par l'identification d'une trame non valide. Cela permet d'autoriser une compression quasi totale de la trame ainsi constituée, puisque après compression, seules sont transmises les informations d'entête compactées utilisées pour supprimer les informations redondantes ou non pertinentes, afin d'être restituées côté opposé à l'identique de ce qu'elles étaient avant compression. Cette compression est effectuée soit par le routeur central RC lui-même, soit par un équipement séparé, situé en aval du routeur central RC.

Chaque fois que le module d'analyse MA détecte une telle trame d'un flux principal, il ordonne au routeur de trafic central RC d'extraire (supprimer) de cette trame de flux principal les données utiles qu'elle contient afin de constituer une trame de flux secondaire ne comprenant que ses informations d'entête (le champ données utiles étant alors rempli par des bits de bourrage, et l'identification du type de trame TRAU étant modifiée en conséquence pour signaler qu'il s'agit d'une trame non valide ou de bourrage), et de transmettre cette trame de flux secondaire à destination de l'autre routeur de trafic Ri' (ou Ri), via la portion de réseau de transmission PC, SAT, Pi' (ou Pi). Le trajet de cette trame de flux secondaire est matérialisé sur la figure 3 par un trait en pointillés.

De préférence, le module d'analyse MA n'adresse un tel ordre d'extraction de données utiles au routeur de trafic central RC qu'à condition que ce dernier ait préalablement reçu du routeur de trafic Ri' (ou Ri) qui est le destinataire de la trame de flux principal candidate à l'extraction, via la portion de réseau de transmission Pi' (ou Pi), SAT, PC, une trame définissant un message d'acquittement signalant qu'il a correctement reçu (sur le trajet direct) les données utiles contenues dans la trame de flux principal qui correspond à celle qui est candidate à l'extraction.

A cet effet, le module de détection MD de chaque premier dispositif d'aide Di est chargé de déterminer si son routeur de trafic Ri a correctement reçu les données utiles contenues dans une trame de flux principal issue directement de l'autre routeur de trafic Ri'. Cette détermination peut se faire par détection des trames présentes sur le lien direct établi entre le site distant SDi' et le site distant SDi au lieu défini par l'allocation de ressources (fréquence de réception et intervalle temporel ou code spécifié). Dans l'affirmative, le module de détection MD ordonne à son routeur de trafic Ri de transmettre un message d'acquittement à destination du site central. Le second dispositif d'aide DA déclenchant une temporisation lors de la détection d'une trame de flux principal candidate à l'extraction de données utiles, si le routeur de trafic central RC reçoit un message d'acquittement pendant la durée de la temporisation correspondante, il ordonne l'extraction de données. Le champ de données utiles est alors rempli par des bits de bourrage, l'identification du type de trame TRAU est modifiée pour signifier qu'il s'agit d'une trame non valide ou de bourrage, puis l'ensemble (données d'entête modifiées plus champ de données utiles) est compressé dans le routeur de trafic central RC ou dans un équipement placé en aval. Dans un mode de réalisation particulier, seul l'entête est modifié pour signifier qu'il s'agit d'une trame non valide ou de bourrage, dans le cas où la compression avant transmission satellite se base uniquement sur l'état des bits d'entête.

Dans la négative, aucun message d'acquittement n'est transmis au site central et le premier dispositif d'aide Di n'autorise pas son routeur de trafic Ri à utiliser les données utiles contenues dans la trame de flux principal reçue directement. Du côté du site central, le second dispositif d'aide DA n'ayant pas reçu de message d'acquittement correspondant à la trame de flux principal candidate à l'extraction de données utiles à l'expiration de sa durée de temporisation, il n'intervient pas et laisse cette trame de flux principal poursuivre classiquement son chemin vers le routeur de trafic Ri (ou Ri') destinataire (sous l'appellation de trame de flux secondaire). Ce dernier pourra alors la router vers le terminal Tk (ou Tk') qui en est le destinataire final.

Il est important de noter que les trames de flux principal passées par le commutateur d'appels MSC (sur le trajet indirect) et les trames de flux secondaire générées par le routeur de trafic central RC sont traitées (démodulées) dans un site distant SDi par son terminal de traitement TDi (par exemple de type DVB-RCS). Les trames de flux principal (reçues directement) pourraient être également traitées (démodulées) par ce terminal de traitement TDi, à condition que la même forme d'onde soit utilisée dans le sens montant et dans le sens descendant, ce qui n'est pas le cas dans l'exemple non limitatif décrit ici (forme d'onde DVB-S dans le sens descendant (du site central vers les sites distants SDi), et forme d'onde DVB-RCS dans le sens montant). En présence d'une même forme d'onde, cela nécessite de pus une gestion dynamique de sauts de fréquence et d'intervalles temporels (« time slots ») de réception. II est donc généralement préférable de prévoir dans chaque premier dispositif Di au moins un démodulateur MDi chargé de démoduler spécifiquement les trames de flux principal (reçues directement) afin de fournir des données utiles démodulées au routeur de trafic Ri.

On notera que des groupes de ressources de transmission peuvent être alloués préférentiellement à un site distant SDi choisi de manière à limiter le nombre de démodulateurs MDi par site distant. Il est également possible de prévoir deux démodulateurs dans chaque site distant SDi : un premier utilisé pour les premières secondes de communication le temps d'identifier la destination, et un second dédié à chaque site distant SDi et utilisé une fois la destination identifiée.

Lorsqu'un routeur de trafic Ri dispose des données utiles démodulées et des informations relatives à la voix issues d'une trame de flux principal (reçue directement) et d'informations de signalisation issues d'une trame de flux secondaire compressée, il reconstitue une trame TRAU cohérente à partir de ces deux flux d'information. Plus précisément, il reconstruit les entêtes de trames TRAU telles qu'elles étaient avant la compression effectuée du côté du site central (ou hub), mais également les trames non valides et de bourrage, et il insère les données utiles reçues en direct de l'autre site distant (par réception du flux émis par l'autre site distant) dans les trames TRAU vides obtenues par expansion du flux reçu du site central. Les bits indiquant le type de trame TRAU (parole, non valide, SID, ...) sont établis en fonction de la payload effectivement insérée. Les trames reconstruites sont ensuite routées vers le terminal Tk (ou Tk') qui en est le destinataire final.

On notera qu'il est préférable de reconstruire les trames avec les entêtes de signalisation contenus dans les trames des flux secondaires pour des raisons de synchronisation. On pourrait en effet, dans une variante, décider d'utiliser directement les trames de flux principal reçues directement puisqu'elles contiennent les entêtes de signalisation. Mais, cela augmenterait considérablement la complexité du traitement.

Le premier dispositif d'aide Di et le second dispositif d'aide DA selon l'invention peuvent être réalisés sous la forme de circuits électroniques, de modules logiciels (ou informatiques), ou d'une combinaison de circuits et de logiciels.

Grâce à l'invention, le modèle de fonctionnement en étoile d'un réseau GSM/GPRS n'est pas cassé. Le réseau GSM/GPRS gère en effet la signalisation et les communications comme dans un réseau en étoile standard : le commutateur d'appels (MSC) et le transcodeur (TC) voient passer des trames TRAU normales pendant toute la durée de la communication et le réseau ne sait pas que les données utiles (payload) des trames de trafic (TRAU) sont récupérées en direct par un site distant destinataire.

L'invention ne se limite pas aux modes de réalisation de premier dispositif d'aide, de second dispositif d'aide, de routeur de trafic, de routeur de trafic central, de site distant et de site central décrits ci-avant, seulement à titre d'exemple, mais elle englobe toutes les variantes que pourra envisager l'homme de l'art dans le cadre des revendications ci-après.

## Revendications

1. Dispositif (D1) d'aide au routage de trames entre des terminaux de communication (Tk, Tk'), pour un routeur de trafic (Ri) raccordé, via une portion de réseau de transmission, à un réseau de communication radio comprenant un commutateur d'appels (MSC), **caractérisé en ce qu'**il comprend des moyens de traitement (MT) agencés pour adjoindre des données d'identification dudit routeur de trafic (Ri) à des trames issues d'un premier terminal (Tk), connecté audit routeur de trafic (Ri), et destinées à un second terminal (Tk'), connecté à un autre routeur de trafic (Ri') dudit réseau de communication radio, lesdites données d'identification étant destinées à permettre à cet autre routeur de trafic (Ri') de déterminer pour chaque nouveau circuit établi si ledit routeur de trafic (Ri) est connecté à la même portion de réseau de transmission que celle qui le relie audit réseau de communication radio, et dans l'affirmative d'alerter ledit réseau de communication radio de sorte qu'il alloue à cette portion de réseau de transmission commune des ressources dédiées à la transmission directe de trames d'un flux dit principal entre ces deux routeurs de trafic (Ri, Ri') via ladite portion de réseau de transmission commune, sans un aller/retour via ledit commutateur d'appels (MSC).

2. Dispositif selon la revendication 1, **caractérisé en ce que** lesdits moyens de traitement (MT) sont agencés pour adjoindre des données d'identification définissant au moins un identifiant dudit routeur de trafic (R1), un identifiant de lien de type E1, un identifiant d'intervalle temporel sur ledit lien de type E1 et un identifiant de nombre de bits par trame pouvant être transmis sur ledit lien de type E1.

3. Dispositif selon l'une des revendications 1 et 2, **caractérisé en ce qu'**il comprend des moyens de détection (MD) agencés pour analyser le contenu des trames d'un flux dit secondaire reçues dudit réseau de communication radio via ladite portion de réseau de transmission de manière à déterminer si une trame d'un flux secondaire contient des données d'identification d'un autre routeur de trafic (Ri'), et dans l'affirmative pour adresser audit réseau de communication radio un message signalant que ces deux routeurs de trafic (Ri, Ri') sont connectés à ladite portion de réseau de transmission, de sorte qu'il alloue à ladite portion de réseau de transmission des ressources dédiées à la transmission directe des trames d'un flux principal correspondant audit flux secondaire entre ces deux routeurs de trafic (Ri, Ri') via ladite portion de réseau de transmission, sans un aller/retour via ledit commutateur d'appels (MSC).

4. Dispositif selon la revendication 3, **caractérisé en ce que** lesdits moyens de détection (MD) sont agencés pour intégrer dans ledit message des duplicata des données d'identification du premier routeur de trafic (R1), déterminées dans une trame d'un flux secondaire.

5. Dispositif selon l'une des revendications 1 à 4, **caractérisé en ce qu'**il comprend des moyens de démodulation (MDN) agencés pour extraire les données utiles contenues dans les trames d'un flux principal reçues directement, de sorte qu'elles soient intégrées par ledit routeur de trafic (Ri) dans des trames reconstruites avec leurs informations de signalisation initiales transmises par ledit réseau communication radio via ladite portion de réseau de transmission dans des trames d'un flux secondaire.

6. Routeur de trafic (Ri) pour un réseau de communication radio comprenant un commutateur d'appels (MSC) et au moins une portion de réseau de transmission, **caractérisé en ce qu'**il comprend un dispositif d'aide (Di) selon l'une des revendications précédentes.

7. Dispositif (DA) d'aide au routage de trames entre des terminaux de communication (Tk, Tk'), pour un routeur de trafic central (RC) d'un réseau de communication radio comprenant également un commutateur d'appels (MSC) et des moyens d'allocation (MAR) agencés pour allouer des ressources à au moins une portion de réseau de transmission connectée à au moins deux routeurs de trafic (Ri, Ri'), **caractérisé en ce qu'**il comprend des moyens de contrôle (MC) agencés, en cas de réception d'un message issu de l'un desdits routeurs de trafic (Ri') et signalant que ces deux routeurs de trafic (Ri, Ri') sont connectés à ladite portion de réseau de transmission, pour ordonner auxdits moyens d'allocation (MAR) d'allouer à ladite portion de réseau de transmission des ressources dédiées à la transmission directe de trames d'un flux dit principal entre ces deux routeurs de trafic (Ri, Ri') via ladite portion de réseau de transmission, sans un aller/retour via ledit commutateur d'appels (MSC).

8. Dispositif selon la revendication 7, **caractérisé en ce qu'**il comprend des moyens d'analyse (MA) agencés pour détecter les trames d'un flux principal issues de l'un (Ri) desdits routeurs de trafic et destinées à l'autre desdits routeurs de trafic (Ri') et parvenues pour une seconde fois dans ledit routeur de trafic central (RC) après avoir transité par ledit commutateur d'appels (MSC), de manière à ordonner audit routeur de trafic central (RC) d'extraire desdites trames détectées de ce flux principal les données utiles qu'elles contiennent pour qu'il ne retransmette dans des trames d'un flux dit secondaire que les informations de signalisation qu'elles contiennent à destination dudit autre routeur de trafic (Ri'), via ladite portion de réseau de transmission, ces trames étant signalées via des bits d'entête en tant que trames non valides.

9. Dispositif selon la revendication 8, **caractérisé en ce que** lesdits moyens d'analyse (MA) sont agencés pour déterminer des données d'identification contenues dans des trames d'un flux principal parvenant dans ledit routeur de trafic central (R3) sur une voie montante et sur une voie descendante et pour considérer comme trame détectée d'un flux principal chaque trame de la voie descendante contenant des données d'identification identiques à celles contenues dans une trame d'un flux principal de la voie montante.

10. Dispositif selon l'une des revendications 8 et 9, **caractérisé en ce que** lesdits moyens d'analyse (MA) sont agencés pour ordonner audit routeur de trafic central (RC) de remplacer la signalisation d'une trame détectée d'un flux principal par une signalisation de trame non valide ou de bourrage en cas de réception d'un message d'acquittement provenant d'un routeur de trafic (Ri') ayant correctement reçu des données utiles dans une trame d'un flux principal correspondant à cette trame détectée d'un flux principal.

11. Dispositif selon la revendication 10, **caractérisé en ce que** lesdits moyens d'analyse (MA) sont agencés pour ordonner audit routeur de trafic central (RC) d'effectuer la compression des trames identifiées en tant que trames non valides ou de bourrage, le champ dit de données utiles de ces trames étant alors non transmis.

12. Routeur de trafic central (RC) pour un réseau de communication radio comprenant un commutateur d'appels (MSC) et au moins une portion de réseau de transmission, **caractérisé en ce qu'**il comprend un dispositif d'aide (DA) selon l'une des revendications 7 à 11.
